# EUROPÄISCHE PATENTSCHRIFT

(11) **EP 2 627 923 B1**
(45) Veröffentlichungstag und Bekanntmachung des Hinweises auf die Patenterteilung: **22.07.2015**
(21) Anmeldenummer: 11748328.9
(22) Anmeldetag: 03.08.2011
(51) Int. Cl.: F16C 33/46, F16C 33/56, B29C 67/00

(54) **LAGERBESTANDTEIL, INSBESONDERE WÄLZLAGERKÄFIG, SOWIE VERFAHREN ZU DESSEN HERSTELLUNG**
BEARING COMPONENT, IN PARTICULAR BEARING CAGE AND METHOD FOR ITS MANUFACTURE
ÉLÉMENT DE PALIER, EN PARTICULIER UNE CAGE DE ROULEMENT ET SON PROCÉDÉ DE FABRICATION

(30) Priorität: 20.08.2010 DE 102010034962
(43) Veröffentlichungstag der Anmeldung: 21.08.2013
(73) Patentinhaber: Schaeffler Technologies AG & Co. KG, 91074 Herzogenaurach (DE)
(72) Erfinder: BRAUN, Wolfgang, 97493 Bergrheinfeld (DE)
(86) Internationale Anmeldenummer: PCT/EP2011/063329
(87) Internationale Veröffentlichungsnummer: WO 2012/022616

(56) Entgegenhaltungen:
- DE-A1-102008 013 285
- DE-A1-102008 022 311
- JP-A- 2008 038 978
- JP-A- 2010 249 162

## Beschreibung

Die Erfindung betrifft ein Lagerbestandteil eines Wälz- oder Gleitlagers, insbesondere einen Wälzlagerkäfig eines Wälzlagers, nach Anspruch 5 sowie ein Verfahren nach Anspruch 1 zur Herstellung des Lagerbestandteils, insbesondere des Lagerkäfigs.

Die Erfindung wird im folgenden unter Bezugnahme auf einen Lagerkäfig als Lagerbestandteil eines Wälzlagers näher beschrieben und erläutert; es versteht sich aber, dass die Beschreibung sinngemäß für andere Lagerbestandteile eines Wälz- oder Gleitlagers gilt, beispielsweise für Lagerringe oder Führungsringe bzw. Dichtelemente bzw. Bestandteile hiervon.

Aus der Praxis ist bekannt, Wälzlagerkäfige beispielsweise aus einem Metall oder einem Kunststoff zu fertigen. Speziell sind mit einem Metall beschichtete Kunststoffkäfige bekannt. Dabei treten Schwierigkeiten auf, wenn nur geringe Stückzahlen des Käfigs gefertigt werden sollen, da die bekannten Herstellverfahren für eine Massenfertigung ausgelegt und optimiert sind.

DE 10 2008 022 311 A1 beschreibt einen Wälzlagerkäfig, umfassend ein Grundkorpus aus einem Kunststoff sowie eine nanokristalline Beschichtung aus einem Metall, wobei die Beschichtung das Grundkorpus mechanisch stabilisiert und verschleiß- sowie korrosionsfest macht. Der Wälzlagerkäfig wird hergestellt, indem zuerst das Grundkorpus als Spritzgussteil aus einem Thermoplasten bereitgestellt wird, und nachfolgend die nanokristalline Beschichtung mittels eines elektrochemischen, insbesondere galvanischen Verfahrens aufgebracht wird. Die Herstellung des Grundkorpus durch das Spritzgießen ist aufwendig und setzt teure Werkzeuge der Kunststofftechnologie voraus, die nur bei hohen Stückzahlen wirtschaftlich sind. Es ist jedenfalls nicht wirtschaftlich, nur kleine Stückzahlen im Rahmen einer Kleinserie zu fertigen.

JP 2008038978 A offenbart ein Lagerbestandteil, insbes. Wälzlagerkäfig und ein Verfahren zu dessen Herstellung, umfassend die Herstellung eines Grundkorpus mittels "rapid prototyping".

### Aufgabe der Erfindung

Es ist die Aufgabe der Erfindung, ein Verfahren zur Herstellung eines Lagerbestandteils, insbesondere eines Wälzlagerkäfigs, anzugeben, das für die Fertigung von nur geringen Stückzahlen im Rahmen einer Kleinserie geeignet ist.

### Zusammenfassung der Erfindung

Diese Aufgabe wird erfindungsgemäß gelöst durch ein Verfahren nach Anspruch 1 zur Herstellung eines Lagerbestandteils, insbesondere eines Wälzlagerkäfigs, umfassend die Schritte: Bereitstellen eines endkonturnahen, mittels eines stereolithographischen Verfahrens oder mittels eines 3D-Druckverfahrens hergestellten Grundkorpus, und Beschichten des bereitgestellten Grundkorpus mit einer dünnen, nanokristallinen Beschichtung. Diese Aufgabe wird ebenfalls gelöst durch ein Lagerbestandteil, insbesondere Wälzlagerkäfig, umfassend ein Grundkorpus sowie eine auf dem Grundkorpus befestigte nanokristalline Beschichtung, dadurch gekennzeichnet, dass das Grundkorpus mittels eines stereolithographischen Verfahrens oder mittels eines 3D-Druckverfahrens hergestellt ist.

Beide alternative Fertigungsschritte des ersten Verfahrensschrittes, nämlich sowohl das stereolithographische Verfahren als auch das 3D-Druckverfahren, sind besonders geeignet, ein Grundkorpus speziell des Wälzlagerkäfigs herzustellen, der in seiner dreidimensionalen Form bereits im wesentlichen der Form des Wälzlagerkäfigs entspricht, und zwar in sehr kurzer Zeit in einer nur geringen Stückzahl. Das nach dem ersten Verfahrensschritt erhaltene Grundkorpus ist endkonturnah, entspricht also in den Abmessungen bereits im wesentlichen, bis auf die im zweiten Verfahrensschritt noch aufzubringende nanokristalline Beschichtung, dem fertigen Wälzlagerkäfig. Allerdings weist das Grundkorpus noch eine für die vorgesehene Anwendung nicht ausreichende mechanische Festigkeit bzw. chemische Beständigkeit auf, so dass die in dem zweiten Verfahrensschritt aufgebrachte Beschichtung aufgrund der nanokristallinen Eigenschaften eine mechanische sowie chemische Festigkeit bewirkt.

Als stereolithographisches Verfahren wird ein Herstellverfahren für das Grundkorpus bezeichnet, bei dem eine Flüssigkeit, beispielsweise ein Photopolymer, in einem Behältnis bereitgestellt wird. Eine gezielte Bestrahlung von ausgewählten Abschnitten des Photopolymers lässt dieses erhärten, so dass sich eine zusammenhängende dreidimensionale Form ergibt, die das Grundkorpus ausbildet. Beispielsweise kann vorgesehen sein, einen Laserstrahl durch das Photopolymer gerichtet zu führen, so dass der Laserstrahl ein Erhärten des Photopolymers bewirkt. Speziell kann vorgesehen sein, zwei oder mehr Laserstrahlen durch das Photopolymer zu führen, die an ihrem jeweiligen Schnittpunkt das Erhärten des Photopolymers ermöglichen. Es versteht sich dabei, dass anstelle einer Flüssigkeit auch ein unter Strahlung aushärtendes, in wesentliches formstabiles Gel vorgesehen sein kann, aus dem heraus das Grundkorpus entsteht; insbesondere ist hierbei an eine 2-Photonen-Photopolymerisation zu denken. Alternativ hierzu kann ein Behältnis mit einem Granulat oder Pulver bereitgestellt werden, durch das mindestens ein Laserstrahl geführt wird, der das Granulat oder Pulver lokal schmelzen lässt, so dass sich eine dreidimensionale Form ergibt.

Als 3D-Druckverfahren wird ein Herstellverfahren für das Grundkorpus bezeichnet, bei dem eine dreidimensionale Form lagenweise, durch Abscheiden und Erhärtenlassen von Schichten ausgebildet wird. Hier kann beispielsweise bei einem pulverbasierten 3D-Druckverfahren eine dünne Lage eines Pulvers aufgetragen und selektiv verfestigt werden, beispielsweise mittels eines Piezodruckkopfs, der einen Binder an die vorgesehenen Stellen aufträgt. In einem abgewandelten 3D-Druckverfahren wird mittels eines Druckerkopfes eine Flüssigkeit, beispielsweise ein Photopolymer, als Lage abgeschieden und unter Strahlung erhärtet lassen werden; viele aneinander befestigte Lagen ergeben dann die dreidimensionale Form des Grundkorpus. In einer Abwandlung hierzu können Granulate lagenweise aufgeschmolzen und aneinander befestigt werden, um die dreidimensionale Form auszubilden.

Es versteht sich hierbei, dass das erfindungsgemäße Verfahren auf die beispielhaft angeführten Möglichkeiten der Durchführung der Herstellung des Grundkorpus im ersten Verfahrensschritt, mittels des stereolithographischen Verfahrens oder mittels des 3D-Druckverfahrens, nicht beschränkt ist.

Vorzugsweise ist hinsichtlich der Durchführung des Verfahrens vorgesehen, dass das Beschichten einen elektrochemischen, insbesondere galvanischen Abscheideschritt umfasst.

Alternativ hierzu ist hinsichtlich der Durchführung des Verfahrens vorgesehen, dass das Beschichten einen Abscheideschritt aus der Gasphase, insbesondere einen CVD- oder PVD-Schritt, umfasst.

Vorzugsweise ist hinsichtlich der Durchführung des Verfahrens vorgesehen, dass das Grundkorpus als Hohlteil bereitgestellt wird. Beispielsweise lässt sich bei der Bereitstellung des Grundkorpus mittels des stereolithographischen Verfahrens eine dreidimensionale Form ausbilden, die keine geschlossene Fläche, sondern eine mit mindestens einem Loch versehene Fläche ausbildet, so dass durch das zumindest eine Loch das innerhalb der dreidimensionalen Form befindliche, verbliebene, im wesentlichen flüssige, körnige oder gelförmige Material austreten bzw. entfernt werden kann. Gerade für die Herstellung von Hohlteilen ist das stereolithographische Verfahren bzw. das 3D-Druckverfahren besonders geeignet, da sich Hohlteile mit anderen Verfahren der Kunststofftechnologie nur aufwendig herstellen lassen.

Vorzugsweise ist für das Lagerbestandteil, insbesondere das mittels des erfindungsgemäßen Verfahrens hergestellte Lagerbestandteil, dass das Grundkorpus als Hohlteil ausgebildet ist. Das hohle Grundkorpus verringert das Gewicht des Lagerbestandteils und kann beispielsweise Schmiermittel aufnehmen.

Vorzugsweise ist für das Lagerbestandteil vorgesehen, dass die nanokristalline Beschichtung als metallische Beschichtung mit einer Schichtdicke von ca. 20 µm bis ca. 1000 µm ausgebildet ist. Aufgrund der geringen Schichtdicke kann das Grundkorpus in seinen Abmessungen im wesentlichen bereits dem fertigen Lagerbestandteil entsprechen. Derartig Schichten mit einer nur geringen Schichtdicke lassen sich beispielsweise elektrochemisch, speziell galvanisch, abscheiden, oder, alternativ hierzu, aus der Gasphase, speziell mittels PVD-(Physical Vapor Deposition)Technologie oder CVD-(Chemical Vapor Deposition)Technologie. Die geringe Schichtdicke ist ausreichend, um dem mechanisch wenig stabilen Grundkorpus die Festigkeit zu verleihen, die das Lagerbestandteil für den späteren Einsatz erforderlich macht.

Vorzugsweise ist vorgesehen, dass die nanokristalline Beschichtung eine mittlere Korngröße von weniger als ca. 500 Nanometern, besonders bevorzugt weniger als ca. 100 Nanometern, aufweist, die aufgrund der nanokristallinen Struktur bereits als dünne Schicht eine hohe Eigensteifigkeit des Lagerbestandteils bewirkt.

Als Material für die Beschichtung kommen Übergangsmetalle wie Nickel, Kobalt oder Eisen in Frage, speziell auch Legierungen, die mindestens eines der drei genannten Metalle enthalten. Alternativ oder ergänzend hierzu kann als Material für die Beschichtung auch Silber, Titan oder Kupfer vorgesehen sein bzw. eine Legierung, die mindestens eines der drei genannten Metalle enthält.

Die in dem zweiten Verfahrensschritt aufgebrachte nanokristalline Beschichtung kann das Grundkorpus vollständig überdecken oder nur abschnittsweise vorgesehen sein, beispielsweise an solchen Abschnitten der Oberfläche des Grundkorpus, die einer verstärkten Reibung mit einem hohen Wärmeeintrag bzw. einem verstärkten Verschleiß ausgesetzt sind.

Weitere Vorteile und Merkmale ergeben sich aus den abhängigen Ansprüchen sowie aus der folgenden Beschreibung eines bevorzugten Ausführungsbeispiels der Erfindung.

Die Erfindung wird im folgenden unter Bezugnahme auf die anliegenden Zeichnungen näher beschrieben und erläutert.

### Kurze Beschreibung der Zeichnungen

- Fig. 1: zeigt eine teilweise geschnittene Ansicht eines Ausführungsbeispiels eines erfindungsgemäßen Lagerbestandteils, das nach einer beispielhaften Durchführung des erfindungsgemäßen Verfahrens hergestellt ist, und
- Fig. 2: zeigt den Ausschnitt 'X' aus Fig. 1 vergrößert.

### Detaillierte Beschreibung der Zeichnung

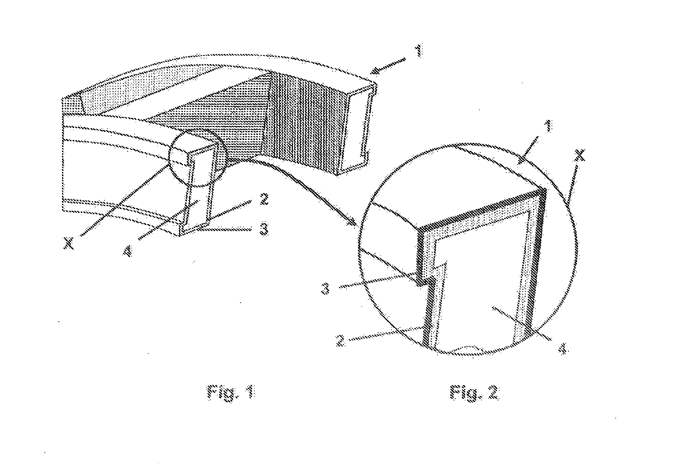

Fig. 1 bzw. Fig. 2 zeigt ein als Wälzlagerkäfig 1 ausgebildetes Lagerbestandteil, wobei das Korpus des Wälzlagerkäfigs 1 ein Grundkorpus 2 aus einem erhärteten Photopolymer sowie eine Beschichtung 3 aus einem nanokristallinen Metall aufweist. Die Beschichtung 3 weist eine im wesentlichen homogene Dicke von ca. 20 Mikrometern bis ca. 1000 Mikrometern, vorliegend ca. 100 Mikrometern, auf, und ist an dem Grundkorpus 2 befestigt. Zur Haftvermittlung der nanokristallinen Beschichtung 3 an das Grundkorpus 2 ist eine Zwischenschicht vorgesehen, deren Schichtdicke nur einige Mikrometer beträgt und damit gegenüber der Schichtdicke der nanokristallinen Beschichtung 2 vernachlässigbar ist. Die nanokristalline Beschichtung 2 besteht aus einer Eisen-Nickellegierung, deren Kristallite einen mittleren Korndurchmesser von weniger als ca. 500 Nanometern aufweisen.

Das Grundkorpus 2 ist als Hohlteil mit einer im dreidimensionalen Raum im wesentlichen geschlossenen, zweidimensionalen Fläche ausgebildet mit einer im wesentlichen konstanten Wandstärke von nur wenigen Millimetern. Das Hohlteil umschließt einen Hohlraum 4, der beispielsweise mit Luft oder einem Schmiermittel gefüllt sein kann. Die im wesentlichen geschlossene Fläche des Hohlteils ist an einer bildlich nicht dargestellten Stelle durchbrochen, so dass sich ein Loch in dem Grundkorpus 2 ausbildet, durch das Luft bzw. Schmiermittel ein- bzw. austreten kann.

Bei der Herstellung des Wälzlagerkäfigs 1 wird in einem ersten Verfahrensschritt das Grundkorpus 2 mittels eines stereolithographischen Verfahrens hergestellt, bei dem das Photopolymer als Flüssigkeit in einem Behältnis bereitgestellt wird, dann unter Bestrahlung eines geführten Laserstrahls das Photopolymer lokal ausgehärtet wird, so dass die Wandung des Grundkorpus 2 als dünne, mechanisch nachgiebige dreidimensionale Form mit einem Loch ausgebildet ist. Durch das Loch kann das in dem Grundkorpus 2 verbliebene, nicht ausgehärtete Photopolymer austreten, so dass sich der Hohlraum 4 bildet. Der Laserstrahl wird dabei von einem Rechner gesteuert, in dem die Endkontur des Korpus des Wälzlagerkäfigs 1 hinterlegt ist, so dass das erhaltene Grundkorpus 2 eine endkonturnahe Form aufweist. Es versteht sich, dass die Form des endkonturnahen Grundkorpus 2 im Einzelfall eigens ermittelt und angepasst werden kann, um Beschichtungen 3 mit verschiedenen Schichtdicken Rechnung tragen zu können.

In einem späteren, zweiten Verfahrensschritt wird das Grundkorpus 2 mit der nanokriställinen Beschichtung 3 mittels eines elektrochemischen galvanischen Verfahrens beschichtet, das einen galvanischen Abscheideschritt umfasst. Die mechanischen Eigenschaften der dünnen nanokristallinen Beschichtung 3 stellen dabei sicher, dass der erhaltene Wälzlagerkäfig 2 die für den vorgesehenen Einsatz erforderlichen mechanischen Eigenschaften wie Steifigkeit, Verschleißbeständigkeit sowie Wärmeleitfähigkeit und chemische Beständigkeit erhält.

Bei dem vorstehend beschriebenen Ausführungsbeispiel wurde das endkonturnahe Grundkorpus 2 mittels eines stereolithographischen Verfahrens hergestellt, z. B. durch das Aushärten eines Photopolymers unter Einwirkung eines UV-Lasers. Es versteht sich, dass auch andere Möglichkeiten der Durchführung des stereolithographischen Verfahrens möglich sind. Es versteht sich weiter, dass das endkonturnahe Grundkorpus 2 auch durch ein 3D-Druckverfahren hergestellt sein kann. Ist die dreidimensionale Form des Korpus des Wälzlagerkäfigs 1 oder des Grundkorpus 2 bekannt, beispielsweise rechnerisch vorgegeben, lässt sich das Grundkorpus 2 mittels des stereolithographischen Verfahrens als endkonturnahes Zwischenteil derart berechnen, dass nach dem Beschichten die vorgesehene Endkontur mit den endgültigen Abmessungen erhalten werden kann.

### Bezugszeichenliste

- 1: Wälzlagerkäfig
- 2: Grundkorpus
- 3: nanokristalline Beschichtung
- 4: Hohlraum

## Patentansprüche

1. Verfahren zur Herstellung eines Lagerbestandteils, insbesondere eines Wälzlagerkäfigs (1), umfassend die Schritte:
Bereitstellen eines endkonturnahen, mittels eines stereolithographischen Verfahrens oder mittels eines 3D-Druckverfahrens hergestellten Grundkorpus (2), und
Beschichten des bereitgestellten Grundkorpus (2) mit einer dünnen, nanokristallinen Beschichtung (3).

2. Verfahren nach Anspruch 1, **dadurch gekennzeichnet, dass** das Beschichten einen elektrochemischen, insbesondere galvanischen Abscheideschritt umfasst.

3. Verfahren nach Anspruch 1, **dadurch gekennzeichnet, dass** das Beschichten einen Abscheideschritt aus der Gasphase, insbesondere einen CVD- oder PVD-Schritt, umfasst.

4. Verfahren nach einem der Ansprüche 1 bis 3, **dadurch gekennzeichnet, dass** das Grundkorpus (2) als Hohlteil bereitgestellt wird.

5. Lagerbestandteil, insbesondere Wälzlagerkäfig, hergestellt nach dem Verfahren gemäß einem der Ansprüche 1 bis 4.

6. Lagerbestandteil nach Anspruch 5, **dadurch gekennzeichnet, dass** die nanokristalline Beschichtung (2) als metallische Beschichtung mit einer Schichtdicke von ca. 20 µm bis ca. 1000 µm ausgebildet ist.

7. Lagerbestandteil nach Anspruch 5 oder 6, **dadurch gekennzeichnet, dass** die nanokristalline Beschichtung (3) eine mittlere Korngröße von weniger als ca. 500 Nanometern, insbesondere weniger als ca. 100 Nanometern, aufweist.

## Claims

1. Method for producing a bearing component, in particular a roller bearing cage (1), comprising the following steps:
providing a near net shape base body (2) produced by means of a stereolithographic method or by means of a 3D printing method, and
coating the provided base body (2) with a thin, nanocrystalline coating (3).

2. Method according to Claim 1, **characterized in that** the coating comprises an electrochemical deposition step, in particular an electrodeposition step.

3. Method according to Claim 1, **characterized in that** the coating comprises a vapor deposition step, in particular a CVD or PVD step.

4. Method according to one of Claims 1 to 3, **characterized in that** the base body (2) is provided as a hollow part.

5. Bearing component, in particular a roller bearing cage, produced by the method according to one of Claims 1 to 4.

6. Bearing component according to Claim 5, **characterized in that** the nanocrystalline coating (2) is formed as a metallic coating having a layer thickness of approximately 20 µm to approximately 1000 µm.

7. Bearing component according to Claim 5 or 6, **characterized in that** the nanocrystalline coating (3) has a mean grain size of less than approximately 500 nanometers, in particular less than approximately 100 nanometers.

## Revendications

1. Procédé de fabrication d'un élément de palier, en particulier d'une cage de palier à roulement (1), comprenant les étapes suivantes :
fourniture d'un corps de base (2) proche du contour final, fabriqué au moyen d'un procédé stéréolithographique ou au moyen d'un procédé d'impression tridimensionnelle, et
revêtement du corps de base fourni (2) avec un revêtement mince nanocristallin (3).

2. Procédé selon la revendication 1, **caractérisé en ce que** le revêtement comprend une étape de dépôt électrochimique, en particulier galvanique.

3. Procédé selon la revendication 1, **caractérisé en ce que** le revêtement comprend une étape de dépôt à partir de la phase gazeuse, en particulier une étape CVD ou PVD.

4. Procédé selon l'une quelconque des revendications 1 à 3, **caractérisé en ce que** le corps de base (2) est fourni sous la forme d'une pièce creuse.

5. Elément de palier, en particulier cage de palier à roulement, fabriqué(e) selon le procédé selon l'une quelconque des revendications 1 à 4.

6. Elément de palier selon la revendication 5, **caractérisé en ce que** le revêtement nanocristallin (2) est réalisé sous la forme d'un revêtement métallique ayant une épaisseur de couche d'environ 20 µm à environ 1000 µm.

7. Elément de palier selon la revendication 5 ou 6, **caractérisé en ce que** le revêtement nanocristallin (3) présente une granulométrie moyenne inférieure à environ 500 nm, en particulier inférieure à environ 100 nm.
